# EUROPEAN PATENT APPLICATION

(11) **EP 0 564 718 A1**
(43) Date of publication of application: **13.10.1993**
(21) Application number: 92201029.3
(22) Date of filing: 10.04.1992
(51) Int. Cl.: G03B 23/04

(54) **Photographic slide holder**

(71) Applicant: AGFA-GEVAERT naamloze vennootschap, B-2640 Mortsel (BE)
(72) Inventor: Leonard, Jacques c/o Agfa-Gevaert N.V., DIE 3800, B-2640 Mortsel (BE); Claessens, Ludovicus c/o Agfa-Gevaert N.V.DIE 3800, B-2640 Mortsel (BE)

(57) **Abstract**

A side member 1 for a photographic slide holder comprises an arm 2 formed with a V-bottomed groove 3 for accommodating and locating a side edge of a slide, and means including at least one spring 4, 7 mounting such grooved arm 2 to a yoke fastening member 5.

An abutment 9 limits insertion of a slide into the groove 3, and it may be extended as a yoke which is connected to a second identical side member 1 to form a complete slide holder.

## Description

### BACKGROUND OF THE INVENTION

### FIELD OF THE INVENTION

The present invention relates to photographic slide holders, and in particular to slide holders for holding slides or transparencies during scanning thereof.

### DESCRIPTION OF THE PRIOR ART

As is well known, photographic slides comprise a diapositive held in a frame which latter conventionally has a square periphery. Usually, such frames are either of cardboard or they are of two-part plastics construction. Cardboard frames are typically slightly less than 1mm in thickness, while plastics frames are often about 3mm in thickness or even more.

There is a demand for holding such slides in position, for example during scanning using a suitable light source in order that the image on the diapositive may be converted into an electronic image which may be stored in a computer in order to control printing apparatus, and/or so that the image may be subjected to a computer image-enhancing technique or otherwise processed by the computer. Obviously, the slide has to be maintained in position during scanning and the current practice is to drop the slide into a holder having a square bed and to hold it in position using some form of clip. Precise arrangements differ, but in general, either the slide is pressed against the bed by a spring, or the bed is spring-loaded to press the slide against a detent.

It will be apparent, therefore, that the position of the diapositive within the slide holder will depend on the thickness of the frame in which it is mounted. While this difference in position is unlikely to exceed 2mm as between one slide and the next, it can present certain problems in proper focusing of the light used to scan the diapositive.

### DESCRIPTION OF THE INVENTION

### OBJECT OF THE INVENTION

It is an object of this invention to provide a slide holder of simple construction which enables slides to be positioned with their diapositives in a predictable position despite variations in the thicknesses of the frames of those slides.

### SUMMARY OF THE INVENTION

According to the present invention, there is provided a photographic slide holder, **characterised in that** such holder comprises a yoke carrying a pair of side members having V-bottomed grooves for accommodating and locating opposed side edges of a slide, and wherein at least one said side member has an arm containing a said V-bottomed groove which is resiliently mounted to the yoke.

It is a peculiarity of almost all known photographic slides that each has its diapositive held substantially in the centre of its thickness, whatever that thickness might be. When a slide is inserted into a slide holder in accordance with this invention, opposed side edges will bear against the V-bottoms of the grooves in the side members, and there will thus be a self-centring effect which tends to ensure that the diapositive is always held substantially in the plane of the V-bottoms of the grooves despite variations in thickness of the frames of successive slides. Such a holder may also be of very simple construction.

In some embodiments of the invention, one said side member has a V-bottomed groove which is fixed in position in relation to the yoke, but it is preferred that said side members are substantially identical. It will be appreciated that even if a batch of slides all have exactly the same width dimension, variations in their thicknesses will require variations in the distances between the bases of the V-bottomed grooves of the two side members. This distance variation is more easily accommodated if each side member has a grooved arm which is resiliently mounted to the yoke.

The two side members may be formed integrally with the yoke, or they may be separate fittings. It is preferred that the side members be separable from the yoke for various reasons, *inter alia* that it facilitates manufacture. To this end, in preferred embodiments of the invention, at least one said side member comprises a yoke fastening member and a grooved arm mounted to the fastening member by means including at least one spring.

Advantageously, said grooved arm is so mounted to the yoke fastening member that it is constrained to move substantially parallel with itself against the bias of such spring means. This helps to ensure that a slide will be held evenly and properly located by the side member. By way of example, the grooved arm may be mounted to the yoke fastening member by means of a parallel linkage.

Preferably, said grooved arm is mounted to said yoke fastening member via at least one leaf spring. The or each said leaf spring may suitably extend substantially the full length of said grooved arm, and conveniently the or each said leaf spring extends substantially parallel to said grooved arm. This is a very simple way of forming a resilient parallel linkage ensuring that the grooved arm moves parallel with itself in order to hold a slide correctly.

Advantageously, said side member consists of a said grooved arm, a said yoke fastening member and at least one leaf spring and is formed as an integral moulding. This is a very simple and inexpensive way of manufacturing a said side member.

Preferably, such side member is moulded from plastics material incorporating a fibre filler. The use of a filler presents economies in the use of plastics material, and the use of a fibre filler, for example glass fibres, is of particular value in embodiments having one or more integrally moulded leaf springs. The use of the filler promotes resistance to creep in the plastics material thus prolonging the effective life of the spring.

Advantageously, the or each said leaf spring has a central portion which is thinner than either of its end portions. Such a shaping of a plastics spring has the effect of spreading stresses therein more evenly, further contributing to the life of the spring.

If desired, the spring bias afforded by such an integrally moulded plastics spring may be supplemented by a metal spring. Such a metal spring may be a coil spring or a leaf or other spring.

This invention also extends to a side member for a slide holder as such, and there is accordingly provided a side member for a photographic slide holder, **characterised in that** such side member comprises an arm formed with a V-bottomed groove for accommodating and locating a side edge of a slide, and means including at least one spring mounting such grooved arm to a yoke fastening member.

### BRIEF DESCRIPTION OF THE DRAWINGS

A preferred embodiment of this invention will now be described with reference to the accompanying diagrammatic drawings in which:
Figure 1 is an elevation of a side member of a slide holder in accordance with this invention,
Figure 2 is a plan view taken in the direction of the arrow A in Figure 1, and
Figure 3 is an elevation of a yoke of a slide holder.

### DETAILED DESCRIPTION OF AN EMBODIMENT OF THE INVENTION

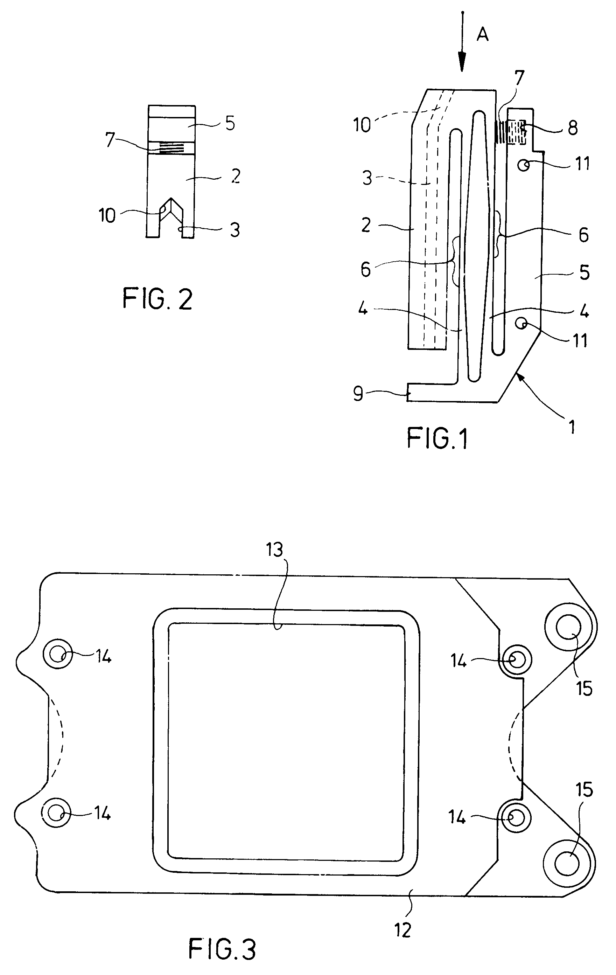

In Figure 1, a side member for a photographic slide holder, generally indicated at 1, comprises an arm 2 formed with a V-bottomed groove 3 for accommodating and locating a side edge of a slide (not shown) and means including two leaf springs 4 mounting such grooved arm 2 to a yoke fastening member 5. The side member 1 is formed as an integral moulding of plastics material filled with a glass fibre filler.

Each leaf spring 4 extends substantially the full length of the grooved arm 2, and each said leaf spring also extends substantially parallel to that grooved arm. As a result, the two leaf springs 4 form a parallel linkage so that the grooved arm 2 is so mounted to the yoke fastening member 5 that it is constrained to move substantially parallel with itself against the bias of those springs 4.

As will be apparent from Figure 1, each of the leaf springs 4 has a central portion 6 which is thinner than either of its end portions. The forces which will be exerted by such springs on insertion of a slide into the groove 3 are not great, and indeed they do not need to be great. Such forces may, however, be supplemented by an optional additional spring of metal if desired. Such a spring is shown at 7, located in a socket in the yoke fastening member 5 towards the upper end thereof to bear on the upper end of one of the plastics leaf springs 4 which are formed integrally with the grooved arm 2. In an alternative arrangement, a leaf or other spring could be located in the gap between the yoke fastening member 5 and the adjacent plastics leaf spring 4.

Also shown in Figure 1, at the lower end of the yoke fastening member 5 is an abutment 9 which projects beneath the V-bottomed groove 3 in the arm 2 in order to limit insertion of a slide into the groove. If desired, that abutment 9 could be extended to form an integral yoke linking a pair of side members 1, but it will be appreciated that this would lead to a rather complicated shape for injection moulding.

At the upper end of the grooved arm 2, also seen in Figure 2, the groove 3 has a portion 10 which is cut back towards the yoke fastening member 5 to provide a widened mouth to facilitate the introduction of a slide into the groove 3.

The yoke fastening member 5 is suitably fastened to a yoke 12 (see Figure 3) by means of self-tapping screws (not shown) passing through bores 14 of the yoke and tapping into bores 11 of the fastening member 5.

An embodiment of yoke 12 is shown generally in Figure 3. The yoke 12 has a central aperture 13 allowing inspection of a slide carried thereby from both sides, and it also carries locating pins 15 so that it may be set in position onto a scanning table for scanning of a slide held by the slide holder using a laser or other suitable light source.

## Claims

1. A photographic slide holder, **characterised in that** such holder comprises a yoke (12) carrying a pair of side members (1) having V-bottomed grooves (3) for accommodating and locating opposed side edges of a slide, and wherein at least one said side member (1) has an arm (2) containing a said V-bottomed groove (3) which is resiliently mounted (4) to the yoke.

2. A slide holder according to claim 1, wherein said side members (1) are substantially identical.

3. A slide holder according to claim 1 or 2, wherein at least one said side member (1) comprises a yoke fastening member (5) and a grooved arm (2) mounted to the fastening member (5) by means including at least one spring (4, 7).

4. A slide holder according to claim 3, wherein said grooved arm (2) is so mounted (4) to the yoke fastening member (5) that it is constrained to move substantially parallel with itself against the bias of such spring means (4, 7).

5. A slide holder according to claim 3 or 4, wherein said grooved arm (2) is mounted to said yoke fastening member (5) *via* at least one leaf spring (4).

6. A slide holder according to claim 5, wherein the or each said leaf spring (4) extends substantially the full length of said grooved arm (2).

7. A slide holder according to claim 5 or 6, wherein the or each said leaf spring (4) extends substantially parallel to said grooved arm (2).

8. A slide holder according to any of claims 3 to 7, wherein said side member (1) consists of a said grooved arm (2), a said yoke fastening member (5) and at least one leaf spring (4) and is formed as an integral moulding.

9. A slide bolder according to any of claims 3 to 8, wherein such side member (1) is moulded from plastics material incorporating a fibre filler.

10. A slide holder according to claim 8 or 9, wherein the or each said leaf spring (4) has a central portion (6) which is thinner than either of its end portions.

11. A slide holder according to any preceding claim, wherein a said side member (1) is equipped with a metal spring (7) for biasing said arm (2).

12. A side member (1) for a photographic slide holder, **characterised in that** such side member (1) comprises an arm (2) formed with a V-bottomed groove (3) for accommodating and locating a side edge of a slide, and means including at least one spring (4, 7) mounting such grooved arm (2) to a yoke fastening member (5).

13. A side member according to claim 12, wherein such side member (1) has any of the features specified in any of claims 4 to 11 hereof.
